# EUROPEAN PATENT SPECIFICATION

(11) **EP 4 468 586 B1**
(45) Date of publication and mention of the grant of the patent: **03.12.2025**
(21) Application number: 23841810.7
(22) Date of filing: 06.04.2023
(51) Int. Cl.: H02M 7/04, H02M 1/00, H02J 7/00, A47B 13/08, A47B 9/00, H02M 3/156, H02M 1/10

(54) **ELECTRIC LIFTING/LOWERING MECHANISM**
ELEKTRISCHER HEBE-/SENKMECHANISMUS
MÉCANISME DE LEVAGE/ABAISSEMENT ÉLECTRIQUE

(30) Priority: 21.07.2022 CN 202210863601
(43) Date of publication of application: 27.11.2024
(73) Proprietor: Zhejiang Jiecang Linear Motion Technology Co., Ltd, Shaoxing, Zhejiang 312500 (CN)
(72) Inventor: CHEN, Xueli, Shaoxing, Zhejiang 312500 (CN); DENG, Qing, Shaoxing, Zhejiang 312500 (CN); ZHOU, Shaoping, Shaoxing, Zhejiang 312500 (CN)
(74) Representative: karo IP
(86) International application number: PCT/CN2023/086402
(87) International publication number: WO 2024/016737

(56) References cited:
- EP-A1- 3 567 712
- WO-A1-2018/223240
- CN-A- 107 508 331
- CN-A- 113 890 134
- CN-A- 115 276 427
- CN-U- 208 028 617
- CN-U- 215 221 755
- TW-A- 200 820 538

## Description

### FIELD

The present disclosure relates to height adjustable equipment, and more particularly relates to an electric lifting mechanism.

### BACKGROUND

Height adjustable equipment has a height adjustable feature. Currently, many types of smart furniture are height adjustable. For example, an electric standing desk allows for adjustment of desktop height so as to satisfy demands of users of different body heights. The electric standing desk generally comprises a lifting column configured to control lifting and lowering of the desktop, a controller configured to control the lifting column, and a human-machine interaction device (generally referring to a wired or wireless manipulator) via which the controller may be manipulated to actuate operation of the lifting column. There are high demands on tailored and versatile wired human-machine interaction devices. Now, the demands on wired charging or wireless charging increase. Since controller design generally does not change frequently, it would be more economical to extract power from the controller for electricity supply; however, in many scenarios, the controller may be located beyond user accessibility; therefore, it is a convenient solution to integrate a charging port or a wireless charging module into the wired manipulator. However, since the voltage supplied to the manipulator is generally 5V or 3.3V, its power is limited, generally not more than 10W, so that it can hardly provide high-power charging, resulting in a slow charging speed and a deteriorated user experience. CN 215 221 755 U discloses a known electric lifting mechanism that corresponds to the preamble of claim 1.

### SUMMARY

To overcome the above and other drawbacks in conventional technologies, an electric lifting mechanism is provided, which can present two different voltages via a common interface, thereby increasing an output power of a power share block.

The present disclosure adopts a technical solution below:
An electric lifting mechanism, comprising a height adjustable platform, a human-machine interaction block, a controller arranged on the height adjustable platform, and a lifting column configured to drive the height adjustable platform to perform an up or down movement, the lifting column comprising a column and an electric motor driving the column to extend or retract, a human-machine interface being arranged on the controller, the human-machine interaction block being electrically connected to the human-machine interface, wherein the controller comprises a first power circuit and a second power circuit, the first power circuit being electrically connected to the human-machine interface to present a first supply voltage to the human-machine interaction block, the second power circuit presenting a second supply voltage to the electric motor; the electric lifting mechanism
further comprises a power share block arranged on the human-machine interaction block, the second power circuit being electrically connected to the human-machine interface to present the second supply voltage to the power share block so as to increase an output power of the power share block.

Based on the solution *supra,* the second power circuit comprises a motor power circuit and a first control configured to control the electric motor, the human-machine interface being electrically connected to the motor power circuit.

Based on the solution *supra,* the first control comprises a sampler block configured to acquire an operating state of the motor power circuit and a protector block configured to adjust a power allocated to the electric motor based on a signal from the sampler block.

Based on the solution *supra,* the sampler block at least comprises one of a temperature sampler, a current sampler, and a voltage sampler, the temperature sampler being configured to acquire temperature of a power component in the motor power circuit, the current sampler and the voltage sampler being configured to acquire electrical signals of the motor power circuit.

Based on the solution *supra,* the human-machine interaction block comprises a second control configured to control a power allocated to the power share block.

Based on the solution *supra,* interaction is established between the first control and the second control to allocate a power to the motor power circuit.

Based on the solution *supra,* the controller further comprises a main control configured to process signals and issue a control instruction, the main control being connected to the first control and the second control to establish signal interaction between the first control and the second control.

Based on the solution *supra,* the human-machine interaction block further comprises a key block and/or a display block, the key block and/or the display block being electrically connected to the first power circuit.

Based on the solution *supra,* the controller further comprises a monitor block, the monitor block being electrically connected to the human-machine interface to monitor a power allocated to the power share block, interaction being established between the monitor block and the motor power circuit.

Based on the solution *supra,* the human-machine interface comprises a first group of pins electrically connected to the first power circuit and a second group of pins electrically connected to the second power circuit.

Based on the solution *supra,* the controller comprises a power source connector connecting to an alternating-current AC voltage, the first power circuit comprises a first alternating-current to direct-current AC-DC converter for voltage conversion, and the second power circuit comprises a second AC-DC converter for voltage conversion, the first AC-DC converter being parallel connected to the second AC-DC converter; or, the controller comprises a power source connector connecting to an AC voltage, the second power circuit comprises an AC-DC converter for voltage conversion, and the first power circuit comprises a step-down voltage regulator configured to output a low-voltage direct current DC, the step-down voltage regulator, after passing through a filter circuit, being electrically connected to the AC-DC converter.

Based on the solution *supra,* the controller comprises a power source connector connecting to a direct current DC voltage, the second power circuit comprises a voltage regulator configured for voltage step-up or voltage step-down, and the first power circuit comprises a step-down voltage regulator/voltage stabilizer configured for voltage step-down/stabilization, the step-down voltage regulator/voltage stabilizer being electrically connected to the voltage regulator or being parallel connected to the voltage regulator; or, the controller comprises a power source connector connecting to a DC voltage, and the first power circuit comprises a step-down voltage regulator for voltage step-down, the step-down voltage regulator, after passing through a filter circuit, being electrically connected to the power source connector, the second power circuit, after passing through a filter circuit, being electrically connected to the power source connector.

Based on the solution *supra,* the first supply voltage is less than 12V.

Based on the solution *supra,* the second supply voltage is in a range from 12V to 40V.

Based on the solution *supra,* the power share block is a power share interface arranged on the human-machine interaction block; or, the power share block is a wireless charging platform arranged on the human-machine interaction block.

Based on the solution *supra,* the power share block comprises a voltage stabilizer and a protocol block supporting at least one of quick charging QC, power delivery PD, and Qi charging protocols.

The present disclosure offers the following benefits:
The electric lifting mechanism described herein comprises a lifting column, and a controller configured to control lifting and lowering of the lifting column so that the height adjustable platform can be automatically lifted and lowered to satisfy user requirements, the human-machine interaction block being electrically connected to the controller. The controller powers the human-machine interaction block and communicates with the human-machine interaction block via electrical connection, i.e., the controller may read a signal emitted by the human-machine interaction block. On the human-machine interaction block is arranged a power share block that serves to power or charge an external device such as a mobile phone, a fan, etc.

The human-machine interface is electrically connected to both of the first power circuit and the second power circuit, so that two different operating voltages can be presented to the human-machine interaction block, the first supply voltage serving to power the human-machine interaction block, the second supply voltage serving to power the power share block; this prevents over voltage of the second power circuit from damaging internal components of the human-machine interaction block. Since the second supply voltage is also used to power the electric motor to actuate the electric motor to operate, its voltage value is relatively high, so that the shared voltage outputted by the power share block also increases, which increases the electrical power to share, allowing for actuation of an external device requiring a higher voltage or increase of charging speed of the external device, thereby satisfying user requirements.

By arranging the power share block on the human-machine interaction block, the count of devices externally connected to the controller may be reduced, making the height adjustable platform tidier; since the human-machine interaction block and the power share block are powered via a common human-machine interface, the count of wires externally connected to the controller may be reduced.

Furthermore, the second power circuit comprises a motor power circuit and a first control configured to control the electric motor, the human-machine interface being electrically connected to the motor power circuit. The second power circuit comprises a plurality of loops and unit modules, where the motor power circuit can supply voltage to the electric motor. By extracting power from the motor power circuit and connecting the power share block and the electric motor in parallel, it is ensured that the power share block is presented with a relatively high supply voltage. The motor power circuit can provide a stable DC voltage to the electric motor so as to maintain stable operation of the electric motor; therefore, the voltage presented to the power share block is also a DC voltage, so that the power share block has a stable output power. The first control is configurable to control the electric motor so as to control operating speed and operating direction of the electric motor.

Furthermore, the first control comprises a sampler block configured to acquire an operating state of the motor power circuit and a protector block configured to adjust a power allocated to the electric motor based on a signal from the sampler block. The sampler block can collect operating state information of the motor power circuit such as voltage, temperature, and power, and the protector block can adjust the power allocated to the electric motor based on the operating state information so as to prevent occurrence of abnormality to the motor power circuit, thereby protecting the motor power circuit so that it can maintain a normal operation. The first control is built in the controller; by connecting the power share block into the motor power circuit, the power of the motor power circuit is adjusted using the in-built first control, so that normal operation of the motor power circuit is maintained.

Furthermore, the sampler block at least comprises one of a temperature sampler, a current sampler, and a voltage sampler, the temperature sampler being configured to acquire temperature of a power component in the motor power circuit, the current sampler and the voltage sampler being configured to acquire electrical signals of the motor power circuit. The sampler block can acquire at least one of temperature data, current data, and voltage data of the motor power circuit as a basis for determining an operating state of the motor power circuit; when abnormal data are acquired, it is needed to adjust power of the motor power circuit using the protector block, and when necessary, the electric motor is deactivated to protect the motor power circuit.

Furthermore, the human-machine interaction block comprises a second control configured to control a power allocated to the power share block. When the electric motor and the power share block are both operating, it is needed to first ensure normal operation of the electric motor so that the height adjustable platform can be lifted and lowered stably at a uniform speed. By adjusting the power allocated to the power share block using the second control, adverse effect on operation of the electric motor due to insufficient power presented by the motor power circuit is prevented.

Furthermore, interaction is established between the first control and the second control to allocate a power to the motor power circuit. The first control and the second control may acquire operating state information of the electric motor and the power share block, respectively; in conjunction with respective operating state information of the electric motor and the power share block, respective power occupied by the electric motor and the power share block is reasonably allocated.

Furthermore, the controller further comprises a main control configured to process signals and issue a control instruction, the main control being connected to the first control and the second control to establish signal interaction between the first control and the second control. The main control can centrally process data information from the first control and the second control, generate corresponding control instructions based on the data information, whereby the first control and the second control can control the electric motor and the power share block, respectively.

Furthermore, the controller further comprises a monitor block, the monitor block being electrically connected to the human-machine interface to monitor a power allocated to the power share block, interaction being established between the monitor block and the motor power circuit. By monitoring the power allocated to the power share block via the monitor block, occurrence of abnormality to the motor power circuit due to over high power allocated to the power share block is avoided, whereby the motor power circuit is protected and can maintain a normal operation.

Furthermore, the human-machine interface comprises a first group of pins electrically connected to the first power circuit and a second group of pins electrically connected to the second power circuit. The first group of pins and the second group of pins are independent of each other; the first power circuit enables, via the first group of pins, the human-machine interface to output the first supply voltage, the second power circuit enables, via the second group of pins, the human-machine interface to output the second supply voltage, whereby two different voltages may be presented via one interface.

Furthermore, the controller comprises a power source connector connecting to an alternating-current AC voltage, the first power circuit comprises a first alternating-current to direct-current AC-DC converter for voltage conversion, and the second power circuit comprises a second AC-DC converter for voltage conversion, the first AC-DC converter being parallel connected to the second AC-DC converter; or, the controller comprises a power source connector connecting to an AC voltage, the second power circuit comprises an AC-DC converter for voltage conversion, and the first power circuit comprises a step-down voltage regulator configured to output a low-voltage direct current DC, the step-down voltage regulator, after passing through a filter circuit, being electrically connected to the AC-DC converter. The controller is directly electrically connected to a 220V AC source; the first AC-DC converter can convert the 220V AC voltage to a DC voltage satisfying operation of the human-machine interaction block, and the second AC-DC converter can convert the 220V AC voltage to a DC voltage satisfying operation of the electric motor. Since the electric motor and the human-machine interaction block require different operating voltages, a voltage value of the DC voltage converted by the first AC-DC converter is smaller than a voltage value of the DC voltage converted by the second AC-DC converter. Of course, the present disclosure also discloses another voltage conversion manner, i.e., the AC-DC converter converts the 220V AC voltage to a DC voltage satisfying actuation of the electric motor, and then the step-down voltage regulator electrically connected to the AC-DC converter steps down the high DC voltage to power the human-machine interaction block.

Furthermore, the controller comprises a power source connector for connecting to a direct current DC voltage, the second power circuit comprises a voltage regulator configured for voltage step-up or voltage step-down, and the first power circuit comprises a step-down voltage regulator/voltage stabilizer configured for voltage step-down/stabilization, the step-down voltage regulator/voltage stabilizer being electrically connected to the voltage regulator or being parallel connected to the voltage regulator; or, the controller comprises a power source connector for connecting to a DC voltage, and the first power circuit comprises a step-down voltage regulator for voltage step-down, the step-down voltage regulator, after passing through a filter circuit, being electrically connected to the power source connector, the second power circuit, after passing through a filter circuit, being electrically connected to the power source connector. The controller is directly electrically connected to a DC source, which eliminates a need of arranging an AC-DC converter for converting an AC voltage to a DC voltage; the DC voltage can directly power the electric motor, the human-machine interaction block and the power share block. If the voltage value of the DC voltage satisfies power requirements of the electric motor and the power share block, enough voltage can be supplied to the electric motor and the power share block by directly connecting the first power circuit to the power source connector. If the voltage value of the DC voltage is insufficient, the voltage regulator can boost the DC voltage; if the voltage value is over high, the voltage regulator can step down the DC voltage, thereby satisfying power requirements of the electric motor and the power share block. The first power circuit needs to provide a lower DC voltage to the human-machine interaction block; to achieve this, the first power circuit may be connected to the power source connector or the voltage regulator via the step-down voltage regulator, so that the human-machine interaction block is powered with the stepped-down voltage.

Furthermore, the power share block is a power share interface arranged on the human-machine interaction block; or, the power share block is a wireless charging platform arranged on the human-machine interaction block. An external device can be electrically connected to the power share interface via a data cable. Examples of the power share interface include a USB connector, a TYPE-C connector, or a typical cord socket. The power share interface can satisfy powering requirements of various types of devices; the wireless charging platform can satisfy use requirements of a wireless charging-enabled device and is also more convenient in use.

Furthermore, the power share block comprises a voltage stabilizer and a protocol block supporting at least one of quick charging QC, power delivery PD, and Qi charging protocols. The voltage stabilizer can stabilize the shared power of the power share block, the protocol block can support high-power voltage supply, contributing a fast-charging feature to the power share block, so that an external device can be charged fast.

These characteristics and advantages of the disclosure will be illustrated in more detail through specific implementations described *infra* with reference to the accompanying drawings.

### BRIEF DESCRIPTION OF THE DRAWINGS

Hereinafter, the disclosure will be further described with reference to the accompanying drawings:
Fig. 1 is a structural schematic diagram of an electric lifting mechanism in an implementation of the disclosure;
Fig. 2 is a system block diagram of a controller in an implementation of the disclosure;
Fig. 3 is a comparison diagram of a type of connector before and after modification in an implementation of the disclosure;
Fig. 4 is a comparison diagram of another type of connector before and after modification in an implementation of the disclosure;
Fig. 5 is a comparison diagram of another type of connector before and after modification in an implementation of the disclosure;
Fig. 6 is a system block diagram of another type of controller in an implementation of the disclosure;
Fig. 7 is a system block diagram of another type of controller in an implementation of the disclosure;
Fig. 8 is a system block diagram of another type of controller in an implementation of the disclosure; and
Fig. 9 is a system block diagram of another type of controller in an implementation of the disclosure;

### Reference Numerals:

height adjustable platform 100, human-machine interaction block 200, controller 300, lifting column 400.

### DETAILED DESCRIPTION OF EMBODIMENTS

Hereinafter, the technical solutions of the disclosure will be explained and illustrated through implementations with reference to the accompanying drawings. However, the implementations are only some implementations of the disclosure, not all of them. Other implementations obtained by those skilled in the art based on the implementations described herein without exercise of inventive work all fall within the protection scope of the disclosure.

The terms "exemplary" and "some implementations" referred to *infra* have a meaning of "used as an example, an implementation, or an illustration"; any implementation referred to as "an example" shall be construed as preferred over or better than other implementations. To ease description of the disclosure, various specific details are given in the implementations described *infra*; those skilled in the art should understand that the disclosure can also be implemented without some of those specific details.

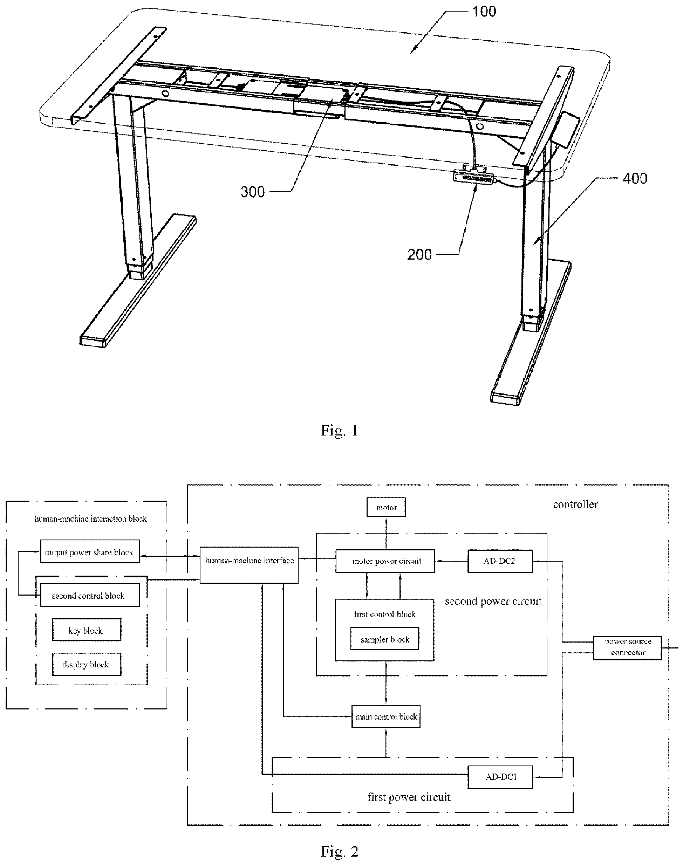

Referring to Figs. 1 through 5, an implementation of the disclosure discloses an electric lifting mechanism, comprising a height adjustable platform 100, a human-machine interaction block 200, a controller 300 arranged on the height adjustable platform 100, and a lifting column 400 configured to drive the height adjustable platform 100 to perform an up or down movement; the lifting column 400 comprises a column and an electrical motor driving the column to extend or retract; a human-machine interface is provided on the controller 300; the human-machine interaction block 200 is electrically connected to the human-machine interface; the controller 300 comprises a first power circuit and a second power circuit, the first power circuit being electrically connected to the human-machine interface to present a first supply voltage to the human-machine interaction block 200, the second power circuit being configured to present a second supply voltage to the electric motor; the electric lifting mechanism further comprises a power share block arranged on the human-machine interaction block 200, the second power circuit being electrically connected to the human-machine interface to present the second supply voltage to the power share block so as to increase an output power of the power share block.

The first supply voltage, which is low, serves to satisfy operation of a typical modular unit, the value of which may be selected as 3.3V or 5V, generally lower than 12V; the second supply voltage, which is relatively high, serves to satisfy operation of a large device or a device having a higher power requirement, the value of which ranges from 12V to 40V.

The electric lifting mechanism described herein comprises a lifting column 400, and a controller 300 configured to control lifting and lowering of the lifting column 400 so that the height adjustable platform 100 can be automatically lifted and lowered to satisfy user requirements, the human-machine interaction block 200 being electrically connected to the controller 300. A user may input a control instruction via the human-machine interaction block 200; the controller 300, in response to reception of the control instruction, may control an up or down movement of the lifting column 400 to implement height adjustment of the height adjustable platform 100. The controller 300 powers the human-machine interaction block 200 and communicates with the human-machine interaction block 200 via electrical connection, i.e., the controller 300 may read a signal emitted by the human-machine interaction block 200. On the human-machine interaction block 200 is arranged a power share block that serves to power or charge an external device such as a mobile phone, a fan, etc. A specific structure of the lifting column 400 can be seen in various conventional technologies, which will not be detailed here.

The human-machine interface is electrically connected to both of the first power circuit and the second power circuit, so that two different operating voltages can be presented to the human-machine interaction block 200, the first supply voltage serving to power the human-machine interaction block 200, the second supply voltage serving to power the power share block; this prevents over voltage of the second power circuit from damaging internal components of the human-machine interaction block 200. Since the second supply voltage is also used to power the electric motor to actuate the electric motor to operate, its voltage value is relatively high, so that the shared voltage outputted by the power share block also increases, which increases the electrical power to share, allowing for actuation of an external device requiring a higher voltage or increase of charging speed of the external device, thereby satisfying user requirements.

By arranging the power share block on the human-machine interaction block 200, the count of devices externally connected to the controller 300 may be reduced, making the height adjustable platform 100 tidier; since the human-machine interaction block 200 and the power share block are powered via a common human-machine interface, the count of wires externally connected to the controller 300 may be reduced.

Pins are arranged at the human-machine interface; after a plug of the human-machine interaction block 200 is fitted with the human-machine interface, the pins may be inserted into holes of the plug to supply power. The human-machine interaction block 200 further comprises a power cord, wires being arranged in the power cord to power internal components of the human-machine interaction block 200 using the current injected through the pins. In the present disclosure, the pins at the human-machine interface are divided into a first group of pins and a second group of pins, the first group of pins and the second group of pins being independent of each other, the first group of pins being electrically connected to the first power circuit so that the human-machine interface can output the first supply voltage, the second group of pins being electrically connected to the second power circuit so that the human-machine interface can output the second supply voltage, whereby two different voltages may be presented via one interface. In the power cord, there is also arranged a wire configured to connect the first group of pins and internal unit modules of the human-machine interaction block 200 and a wire configured to connect the second group of pins and the power share block, the two strands of wires being independent of each other. Compared with a conventional controller 300, the controller 300 according to the present disclosure only has a structural modification in such a manner of providing additional groups of pins at the human-machine interface and providing additional holes for the plug; so, the present disclosure only has a minor modification to the conventional controller 300.

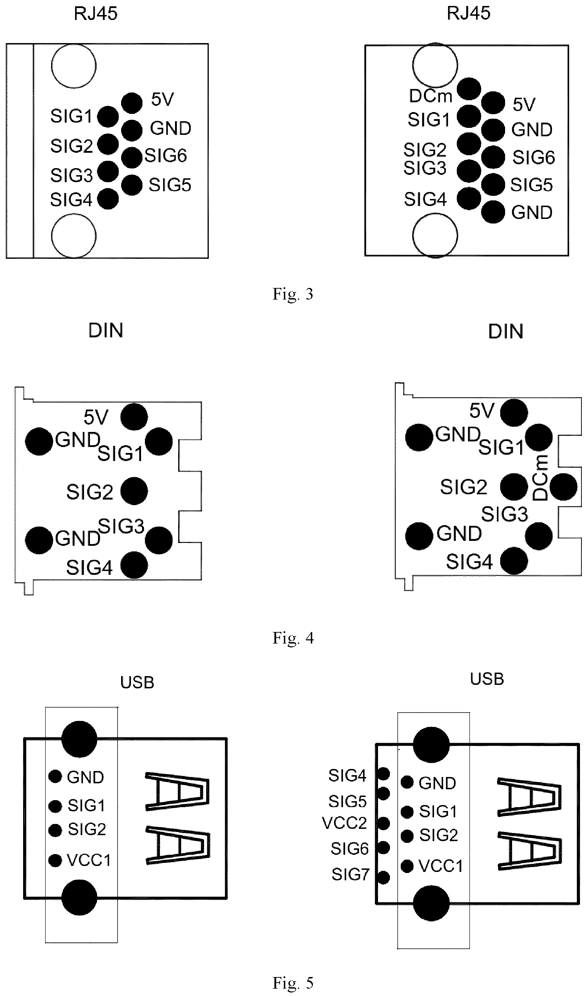

Figs. 3 through 5 illustrate comparative diagrams of three different types of connectors before and after modification, in which the left sides thereof show the corresponding connectors before modification, while the right sides thereof show the connectors after modification. In Fig. 3, the connector is a RJ45 jack, and in the right side thereof, a DCm pin and a GND pin below the SIG5 are newly added, the DCm pin and the GND pin constituting the second group of pins electrically connected to the second power circuit; the remaining pins SIG1, SIG2, SIG3, SIG4, SIG5, SIG6, 5V, and the GND pin between 5V and SIG 6 constitute the first group of pins electrically connected to the first power circuit. In Fig. 4, the connector is a DIN jack, and in the right side thereof, a DCm pin is newly added, the DCm pin constituting a second group of pins electrically connected to the second power circuit; the remaining SIG1, SIG2, SIG3, SIG4, 5V and two GND pins constitute the first group of pins electrically connected to the first power circuit. In Fig. 5, the connector is a USB connector, and in the right side thereof, SIG4, SIG5, VCC2, SIG6 and SIG7 pins are newly added, which constitute the second group of pins and are electrically connected to the second power circuit; the remaining GND, SIG1, SIG2 and VCC1 pins constitute the first group of pins, electrically connected to the first power circuit.

The power share block comprises a voltage stabilizer and a protocol block supporting at least one of QC, PD, QI charging protocols, the voltage stabilizer being configurable to stabilize the shared power of the power share block, the protocol block being capable of supporting high-power voltage supply, contributing a fast-charging feature to the power share block, so that an external device can be charged fast.

Referring to Fig. 2, in an implementation of the disclosure, the second power circuit comprises a motor power circuit and a first control configured to control the electric motor, the human-machine interface being electrically connected to the motor power circuit.

The second power circuit comprises a plurality of circuits and unit modules; the motor power circuit is configurable to supply voltage to the electric motor. Operation of the electric motor needs a DC (direct-current) voltage, while the power share block also needs a DC voltage; therefore, irrespective of whether the voltage inputted into the controller 300 is an AC (alternating-current) voltage or a DC voltage, it needs to be filtered before being supplied to the motor power circuit; by extracting power from the motor power circuit and connecting the power share block and the electric motor in parallel, it is ensured that the power share block is presented with a relatively high supply voltage; in addition, since the voltage presented to the power share block has been filtered, the voltage is stable, so that the power share block has a stable output power.

The first control is configured to control activation, deactivation, and operating direction of the electric motor so as to control movement direction and movement speed of the height adjustable platform 100. The first control regulates the operating speed of the electric motor by varying the power supplied to the electric motor.

Although the electric motor and the power share block are parallel connected and have the same operating voltage, the motor power circuit has a rated electrical power; when the supplied power exceeds the rated value, abnormality would occur to the motor power circuit, e.g., over temperature, or tripping due to circuit overload. As the electric motor and power share block both require a larger power during operating, mutual interference would be generated, leading to a poor user experience. With the first control regulating the power supplied to the electric motor, abnormality of the motor power circuit can be prevented.

The first control comprises a sampler block configurable to acquire an operating state of the motor power circuit and a protector block configurable to adjust power of the electric motor based on a signal from the sampler block. The sampler block can collect operating state information of the motor power circuit such as voltage, temperature, and power, and the protector block can adjust the power allocated to the electric motor based on the operating state information so as to prevent occurrence of abnormality to the motor power circuit, thereby protecting the motor power circuit so that it can maintain a normal operation. The first control is built in the controller 300; by connecting the power share block into the motor power circuit, the power of the motor power circuit is adjusted using the in-built first control, so that normal operation of the motor power circuit is maintained.

In this implementation, the protector block is not a unit module built in the controller 300, but a protection logic and power allocation logic mated with the sampler block, which belongs to a software layer; therefore, the controller 300 enables power allocation without adding extra unit modules.

When the electric motor and the power share block are both operating, it is needed to first ensure normal operation of the electric motor. To reasonably allocate power of the motor power circuit, the human-machine interaction block 200 comprises a second control configured to control the power allocated to the power share block, interaction being established between the first control and the second control.

With the second control adjusting the power allocated to the power share block, it may be avoided that the power share block occupies more power affecting normal operation of the electric motor and causing operational speed reduction or instability of the electric motor. The first control and the second control may acquire operating state information of the electric motor and the power share block, respectively; in conjunction with respective operating state information of the electric motor and the power share block, respective power occupied by the electric motor and the power share block may be reasonably allocated. In this way, when the electric motor and the power share block are both operating, if the user controls, via the human-machine interaction block 200, the height adjustable platform 100 to be slowly lifted or lowered, the first control and the second control may allocate more power to the power share block while allocating less power to the electric motor; if the user controls, via the human-machine interaction block 200, the height adjustable platform 100 to be lifted or lowered fast, the first control and the second control may allocate more power to the electric motor while allocating less power to the power share block. As such, the power of the motor power circuit may be allocated reasonably and flexibly in order to satisfy user requirements.

Or, the power share block is connected into the motor power circuit; the first control may monitor the power share block while monitoring the electric motor, and via interaction with the second control, the second control is enabled to regulate the power allocated to the power share block.

The sampler block as described *supra* comprises a temperature sampler, a current sampler, and a voltage sampler, the temperature sampler being configurable to acquire a temperature of power components in the motor power circuit, the current sampler and the voltage sampler being configurable to acquire electric signals of the motor power circuit. When the sampler block acquires abnormal data, it is needed to adjust power of the motor power circuit using the protector block, and when necessary, the electric motor is deactivated to protect the motor power circuit.

When the circuit temperature acquired by the temperature sampler has an abnormal value, the electric signals of the electric motor acquired by the current sampler and the voltage sampler are used to determine whether the electric motor is in an operating state; if the electric motor is operating, the first control and the second control work jointly for power allocation; if the electric motor is in a standby state, only the second control works to adjust the power of the power share block.

Of course, if the sampler block only includes one or two of the temperature sampler, the current sampler, and the voltage sampler, the data acquired thereby can also serve as a basis for determining an abnormal state of the motor power circuit.

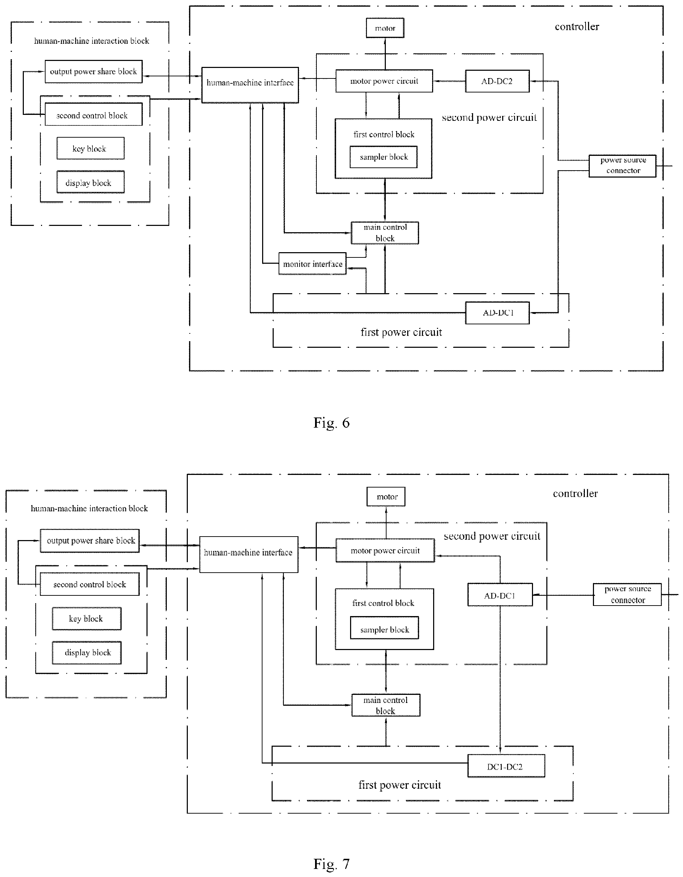

Referring to Fig. 6, in an implementation of the disclosure on the basis of the implementation described *supra,* the controller 300 may also comprise a monitor block. The monitor block is electrically connected to the human-machine interface so as to monitor power allocated to the power share block; by establishing interaction between the monitor block and the first control, the first control is enabled to adjust the power allocated to the electric motor based on data information from the monitor block, avoiding occurrence of abnormality to the motor power circuit due to over high power allocated to the power share block, whereby the motor power circuit is protected and can maintain a normal operation.

Referring to Fig. 2, in an implementation based on the implementations described *supra,* the controller 300 further comprises a main control configurable to process signals and issue control instructions.

The main control may be understood as a central processing unit CPU of the electric lifting mechanism, which is configurable to centrally process data information in the controller 300, analyze the data information, and generate a corresponding control instruction. The main control is connected to the first control and the second control so as to establish signal interaction between the first control and the second control. During operating, the first control and the second control transmit respective operating state information of the electric motor and the power share block to the main control, and the main control analyzes the received signals and generates a control instruction; then the first control and the second control adjust respective power allocated to the electric motor and the power share block based on the instruction.

In an implementation of the disclosure based on the implementations described *supra,* referring to Figs. 2 and 6, the controller 300 comprises a power source connector connecting to an AC voltage; the first power circuit comprises a first AC-DC converter AD-DC1 for voltage conversion, and the second power circuit comprises a second AC-DC converter AD-DC2 for voltage conversion, the first AC-DC converter AD-DC1 being parallel connected to the second AC-DC converter AD-DC2. The controller 300 is directly electrically connected to a 220V AC source; the first AC-DC converter AD-DC1 can convert the 220V AC voltage to a DC voltage satisfying operation of the human-machine interaction block 200, and the second AC-DC converter AD-DC2 can convert the 220V AC voltage to a DC voltage satisfying operation of the electric motor. Since the electric motor and the human-machine interaction block 200 require different operating voltages, a voltage value of the DC voltage converted by the first AC-DC converter AD-DC1 is smaller than a voltage value of the DC voltage converted by the second AC-DC converter AD-DC2.

Of course, another connecting manner is also allowed:
Referring to Fig. 7, the second power circuit comprises an AC-DC converter AD-DC1 for voltage conversion, the first power circuit comprises a step-down voltage regulator DC1-DC2 for outputting a low DC voltage, the step-down voltage regulator DC1-DC2, after passing through a filter circuit, is electrically connected to the AC-DC converter AD-DC1.

The AC-DC converter AD-DC1 converts the 220V AC voltage to a DC voltage satisfying actuation of the electric motor, and then the step-down voltage regulator DC1-DC2 electrically connected to the AC-DC converter AD-DC1 steps down the high DC voltage to power the human-machine interaction block 200.

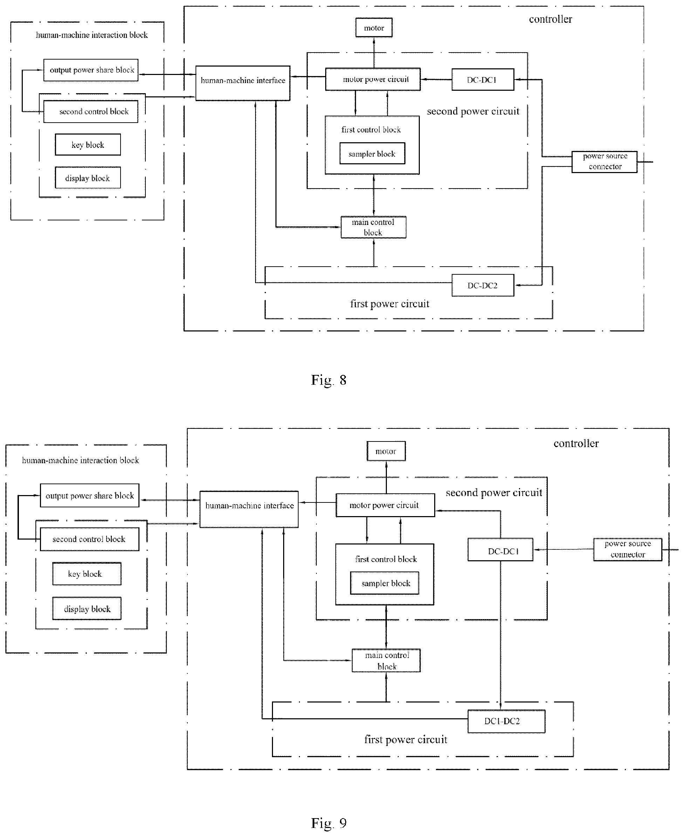

In an implementation of the disclosure, differently, referring to Fig. 8, the controller 300 comprises a power source connector connecting to a DC voltage, the second power circuit comprises a voltage regulator DC-DC1 for voltage step-up or step-down, and the first power circuit comprises a step-down voltage regulator DC1-DC2 for voltage step-down, the step-down voltage regulator DC1-DC2 being electrically connected to the voltage regulator DC-DC1.

Referring to Fig. 9, alternatively, the first power circuit comprises a step-down voltage regulator DC-DC2 configurable for voltage step-down, the step-down voltage regulator DC-DC2 being parallel connected to the voltage regulator DC-DC1.

If the DC voltage of the power source connector can satisfy operating requirements of the human-machine interaction block 200, the first power circuit comprises a voltage stabilizer configurable for voltage stabilization, the voltage stabilizer being parallel connected to the voltage regulator DC-DC1.

The controller 300 is directly electrically connected to a DC source, which eliminates a need of arranging an AC-DC converter for converting an AC voltage to a DC voltage; the DC voltage can directly power the electric motor, the human-machine interaction block 200 and the power share block. If the voltage value of the DC voltage satisfies power requirements of the electric motor and the power share block, enough voltage can be supplied to the electric motor and the power share block by directly connecting the first power circuit to the power source connector. If the voltage value of the DC voltage is insufficient, the voltage regulator DC-DC1 can boost the DC voltage; if the voltage value is over high, the voltage regulator DC-DC1 can step down the DC voltage, thereby satisfying power requirements of the electric motor and the power share block. The first power circuit needs to provide a lower DC voltage to the human-machine interaction block 200; to achieve this, the first power circuit may be connected to the power source connector or the voltage regulator via the step-down voltage regulator, so that the human-machine interaction block 200 is powered with the stepped-down voltage.

The step-down voltage regulator is mentioned in various implementations of the disclosure; it can be appreciated that as an electronic element, the step-down voltage regulator may be reduplicatively arranged in various modules of a same circuit, and such arranged step-down voltage regulators do not refer to a same step-down voltage regulator.

Referring to Fig. 1, in an implementation of the disclosure, the power share block is a power share interface arranged on the human-machine interaction block 200; Fig. 1 illustrates a schematic diagram of connection between a mobile phone and the human-machine interaction block 200, where the mobile phone is connected to the power share interface on the human-machine interaction block 200 via a data cable. An external device can be electrically connected to the power share interface via the data cable. Examples of the power share interface include a USB connector, a TYPE-C connector, or a typical cord socket; a plurality of power share interfaces may also be provided so as to power or charge a plurality of devices; the second control can allocate powers occupied by the plurality of power share interfaces so as to prevent the total power occupied by the power share blocks from being over high.

The power share block may also be a wireless charging platform arranged on the human-machine interaction block. The wireless charging platform can satisfy use requirements of a wireless charging-enabled device and is also more convenient in use.

Referring to Fig. 2, in an implementation of the disclosure, the human-machine interaction block 200 further comprises a key block and a display block, the key block and the display block being electrically connected to the first power circuit. The user may adjust the height of the height adjustable platform 100 in response to an instruction inputted via the key block; the key block comprises a plurality of keys and a circuit board corresponding to the keys; the keys may include an up key, a down key, a fast up key, and a fast down key, etc. The display block may display data information of the electric lifting mechanism, as well as time and date information, etc. The second control is a unit module built in the human-machine interaction block 200, configured to process a signal inputted via the key block and transmit the input signal to the main control in the controller 300; by adding a control logic to the second control, it is enabled to control the power share block connected into the human-machine interaction block 200.

What have been described above are only embodiments of the disclosure; however, the protection scope defined by the appended claims, is not limited to these embodiments.

## Claims

1. An electric lifting mechanism, comprising a height adjustable platform (100), a human-machine interaction block (200), a controller (300) arranged on the height adjustable platform, and a lifting column (400) configured to drive the height adjustable platform (100) to perform an up or down movement, the lifting column (400) comprising a column and an electric motor driving the column to extend or retract, a human-machine interface being arranged on the controller (300), the human-machine interaction block (200) being electrically connected to the human-machine interface, wherein the controller comprises a first power circuit and a second power circuit, the first power circuit being electrically connected to the human-machine interface to present a first supply voltage to the human-machine interaction block (200), the second power circuit presenting a second supply voltage to the electric motor; **characterised in that** the electric lifting mechanism further comprises a power share block arranged on the human-machine interaction block (200), the second power circuit being electrically connected to the human-machine interface to present the second supply voltage to the power share block so as to increase an output power of the power share block.

2. The electric lifting mechanism of claim 1, wherein the second power circuit comprises a motor power circuit and a first control configured to control the electric motor, the human-machine interface being electrically connected to the motor power circuit.

3. The electric lifting mechanism of claim 2, wherein the first control comprises a sampler block configured to acquire an operating state of the motor power circuit and a protector block configured to adjust a power allocated to the electric motor based on a signal from the sampler block.

4. The electric lifting mechanism of claim 3, wherein the sampler block at least comprises one of a temperature sampler, a current sampler, and a voltage sampler, the temperature sampler being configured to acquire temperature of a power component in the motor power circuit, the current sampler and the voltage sampler being configured to acquire electrical signals of the motor power circuit.

5. The electric lifting mechanism of claim 2, wherein the human-machine interaction block comprises a second control configured to control a power allocated to the power share block.

6. The electric lifting mechanism of claim 5, wherein interaction is established between the first control and the second control to allocate a power to the motor power circuit.

7. The electric lifting mechanism of claim 6, wherein the controller further comprises a main control configured to process signals and issue a control instruction, the main control being connected to the first control and the second control to establish signal interaction between the first control and the second control.

8. The electric lifting mechanism of claim 5, wherein the human-machine interaction block further comprises a key block and/or a display block, the key block and/or the display block being electrically connected to the first power circuit.

9. The electric lifting mechanism of claim 2, wherein the controller further comprises a monitor block, the monitor block being electrically connected to the human-machine interface to monitor a power allocated to the power share block, interaction being established between the monitor block and the motor power circuit.

10. The electric lifting mechanism of claim 1, wherein the human-machine interface comprises a first group of pins electrically connected to the first power circuit and a second group of pins electrically connected to the second power circuit.

11. The electric lifting mechanism of claim 1, wherein the controller comprises a power source connector connecting to an alternating-current AC voltage, the first power circuit comprises a first alternating-current to direct-current AC-DC converter for voltage conversion, and the second power circuit comprises a second AC-DC converter for voltage conversion, the first AC-DC converter being parallel connected to the second AC-DC converter; or,
the controller comprises a power source connector connecting to an AC voltage, the second power circuit comprises an AC-DC converter for voltage conversion, and the first power circuit comprises a step-down voltage regulator configured to output a low-voltage direct current DC, the step-down voltage regulator, after passing through a filter circuit, being electrically connected to the AC-DC converter.

12. The electric lifting mechanism of claim 1, wherein the controller comprises a power source connector connecting to a direct current DC voltage, the second power circuit comprises a voltage regulator configured for voltage step-up or voltage step-down, and the first power circuit comprises a step-down voltage regulator/voltage stabilizer configured for voltage step-down/stabilization, the step-down voltage regulator/voltage stabilizer being electrically connected to the voltage regulator or being parallel connected to the voltage regulator; or,
the controller comprises a power source connector connecting to a DC voltage, and the first power circuit comprises a step-down voltage regulator for voltage step-down, the step-down voltage regulator, after passing through a filter circuit, being electrically connected to the power source connector, the second power circuit, after passing through a filter circuit, being electrically connected to the power source connector.

13. The electric lifting mechanism according to any one of claims 1 through 12, wherein the first supply voltage is less than 12V.

14. The electric lifting mechanism according to any one of claims 1 through 12, wherein the second supply voltage is in a range from 12V to 40V.

15. The electric lifting mechanism according to any one of claims 1 through 12, wherein the power share block is a power share interface arranged on the human-machine interaction block; or, the power share block is a wireless charging platform arranged on the human-machine interaction block.

16. The electric lifting mechanism according to any one of claims 1 through 12, wherein the power share block comprises a voltage stabilizer and a protocol block supporting at least one of quick charging QC, power delivery PD, and Qi charging protocols.

## Patentansprüche

1. Ein elektrischer Hebemechanismus, umfassend eine höhenverstellbare Plattform (100), einen Mensch-Maschine-Interaktionsblock (200), eine auf der höhenverstellbaren Plattform angeordnete Steuerung (300) und eine Hubsäule (400), die so konfiguriert ist, dass sie die höhenverstellbare Plattform (100) zu einer Aufwärts- oder Abwärtsbewegung antreibt, wobei die Hubsäule (400) eine Säule und einen Elektromotor umfasst, der die Säule zum Ausfahren oder Einfahren antreibt, wobei eine Mensch-Maschine-Schnittstelle auf der Steuerung (300) angeordnet ist, wobei der Mensch-Maschine-Interaktionsblock (200) elektrisch mit der Mensch-Maschine-Schnittstelle verbunden ist, wobei die Steuerung einen ersten Stromkreis und einen zweiten Stromkreis umfasst, wobei der erste Stromkreis elektrisch mit der Mensch-Maschine-Schnittstelle verbunden ist, um eine erste Versorgungsspannung an den Mensch-Maschine-Interaktionsblock (200) anzulegen, wobei der zweite Stromkreis eine zweite Versorgungsspannung an den Elektromotor anlegt; **dadurch gekennzeichnet, dass** der elektrische Hebemechanismus ferner einen Stromverteilungsblock umfasst, der auf dem Mensch-Maschine-Interaktionsblock (200) angeordnet ist, wobei der zweite Stromkreis elektrisch mit der Mensch-Maschine-Schnittstelle verbunden ist, um dem Stromverteilungsblock die Versorgungsspannung zuzuführen, um so die Ausgangsleistung des Stromverteilungsblocks zu erhöhen.

2. Elektrischer Hebemechanismus nach Anspruch 1, wobei der zweite Stromkreis einen Motorstromkreis und eine erste Steuerung umfasst, die zur Steuerung des Elektromotors konfiguriert ist, wobei die Mensch-Maschine-Schnittstelle elektrisch mit dem Motorstromkreis verbunden ist.

3. Elektrischer Hebemechanismus nach Anspruch 2, wobei die erste Steuerung einen Abtastblock umfasst, der zum Erfassen eines Betriebszustands des Motorstromkreises konfiguriert ist, und einen Schutzblock, der zum Einstellen einer dem Elektromotor zugewiesenen Leistung auf der Grundlage eines Signals vom Abtastblock konfiguriert ist.

4. Elektrischer Hebemechanismus nach Anspruch 3, wobei der Abtastblock mindestens einen Temperatur-Abtaster, einen Strom-Abtaster und einen Spannungs-Abtaster umfasst, wobei der Temperatur-Abtaster so konfiguriert ist, dass er die Temperatur einer Leistungskomponente im Motorstromkreis erfasst, und der Strom-Abtaster und der Spannungs-Abtaster so konfiguriert sind, dass sie elektrische Signale des Motorstromkreises erfassen.

5. Elektrischer Hebemechanismus nach Anspruch 2, wobei der Mensch-Maschine-Interaktionsblock eine zweite Steuerung umfasst, die so konfiguriert ist, dass sie eine dem Stromverteilungsblock zugewiesene Leistung steuert.

6. Elektrischer Hebemechanismus nach Anspruch 5, wobei eine Interaktion zwischen der ersten Steuerung und der zweiten Steuerung hergestellt wird, um dem Motorstromkreis eine Stromleistung zuzuweisen.

7. Elektrischer Hebemechanismus nach Anspruch 6, wobei die Steuerung ferner eine Hauptsteuerung umfasst, die so konfiguriert ist, dass sie Signale verarbeitet und einen Steuerbefehl ausgibt, wobei die Hauptsteuerung mit der ersten Steuerung und der zweiten Steuerung verbunden ist, um eine Signalinteraktion zwischen der ersten Steuerung und der zweiten Steuerung herzustellen.

8. Elektrischer Hebemechanismus nach Anspruch 5, wobei der Mensch-Maschine-Interaktionsblock ferner einen Tastenblock und/oder einen Anzeigeblock umfasst, wobei der Tastenblock und/oder der Anzeigeblock elektrisch mit dem ersten Stromkreis verbunden sind.

9. Elektrischer Hebemechanismus nach Anspruch 2, wobei die Steuerung ferner einen Überwachungsblock umfasst, wobei der Überwachungsblock elektrisch mit der Mensch-Maschine-Schnittstelle verbunden ist, um einen dem Stromverteilungsblock zugewiesenen Leistungsstrom zu überwachen, wobei eine Interaktion zwischen dem Überwachungsblock und dem Motorstromkreis hergestellt wird.

10. Elektrischer Hebemechanismus nach Anspruch 1, wobei die Mensch-Maschine-Schnittstelle eine erste Gruppe von Pins umfasst, die elektrisch mit dem ersten Stromkreis verbunden sind, und eine zweite Gruppe von Pins, die elektrisch mit dem zweiten Stromkreis verbunden sind.

11. Elektrischer Hebemechanismus nach Anspruch 1, wobei die Steuerung einen Stromquellenanschluss umfasst, der mit einer Wechselstromspannung verbunden ist, der erste Stromkreis einen ersten Wechselstrom-Gleichstrom-Wandler zur Spannungsumwandlung umfasst und der zweite Stromkreis einen zweiten Wechselstrom-Gleichstrom-Wandler zur Spannungsumwandlung umfasst, wobei der erste Wechselstrom-Gleichstrom-Wandler parallel zum zweiten Wechselstrom-Gleichstrom-Wandler geschaltet ist, oder
die Steuerung einen Stromquellenanschluss umfasst, der an eine Wechselspannung angeschlossen ist, der zweite Stromkreis einen Wechselstrom-Gleichstrom-Wandler zur Spannungsumwandlung umfasst und der erste Stromkreis einen Abwärts-Spannungsregler umfasst, der so konfiguriert ist, dass er einen Niederspannungs-Gleichstrom ausgibt, wobei der Abwärts-Spannungsregler nach Durchlaufen einer Filterschaltung elektrisch mit dem Wechselstrom-Gleichstrom-Wandler verbunden ist.

12. Elektrischer Hebemechanismus nach Anspruch 1, wobei die Steuerung einen Stromquellenanschluss umfasst, der mit einer Gleichspannung verbunden ist, der zweite Stromkreis einen Spannungsregler umfasst, der für eine Spannungserhöhung oder Spannungsabsenkung konfiguriert ist, und der erste Stromkreis einen Abwärts-Spannungsregler/Spannungsstabilisator umfasst, der für eine Abwärts-Spannungsregelung/Stabilisierung konfiguriert ist, wobei der Abwärts-Spannungsregler/Spannungsstabilisator elektrisch mit dem Spannungsregler verbunden oder parallel zum Spannungsregler geschaltet ist; oder
die Steuerung einen Stromquellenanschluss umfasst, der an eine Gleichspannung angeschlossen ist, und der erste Stromkreis einen Abwärts-Spannungsregler zur Spannungsabsenkung umfasst, wobei der Abwärts-Spannungsregler nach Durchlaufen einer Filterschaltung elektrisch mit dem Stromquellenanschluss verbunden ist und der zweite Stromkreis nach Durchlaufen einer Filterschaltung elektrisch mit dem Stromquellenanschluss verbunden ist.

13. Elektrischer Hebemechanismus nach einem der Ansprüche 1 bis 12, wobei die erste Versorgungsspannung weniger als 12 V beträgt.

14. Elektrischer Hebemechanismus nach einem der Ansprüche 1 bis 12, wobei die zweite Versorgungsspannung in einem Bereich von 12 V bis 40 V liegt.

15. Elektrischer Hebemechanismus nach einem der Ansprüche 1 bis 12, wobei der Stromverteilungsblock eine Stromverteilungsschnittstelle ist, die auf dem Mensch-Maschine-Interaktionsblock angeordnet ist; oder wobei der Stromverteilungsblock eine drahtlose Ladeplattform ist, die auf dem Mensch-Maschine-Interaktionsblock angeordnet ist.

16. Elektrischer Hebemechanismus nach einem der Ansprüche 1 bis 12, wobei der Stromverteilungsblock einen Spannungsstabilisator und einen Protokollblock umfasst, der mindestens eines der Protokolle Schnellladung (QC), Stromversorgung (PD) und Qi-Ladung unterstützt.

## Revendications

1. Mécanisme de levage électrique, comprenant une plate-forme réglable en hauteur (100), un bloc d'interaction homme-machine (200), un dispositif de commande (300) agencé sur la plate-forme réglable en hauteur, et une colonne de levage (400) configurée pour amener la plate-forme réglable en hauteur (100) à effectuer un mouvement ascendant ou descendant, la colonne de levage (400) comprenant une colonne et un moteur électrique amenant la colonne à s'étendre ou à se rétracter, une interface homme-machine étant agencée sur le dispositif de commande (300), le bloc d'interaction homme-machine (200) étant électriquement connecté à l'interface homme-machine, dans lequel le dispositif de commande comprend un premier circuit d'alimentation et un second circuit d'alimentation, le premier circuit d'alimentation étant électriquement connecté à l'interface homme-machine pour soumettre une première tension d'alimentation au bloc d'interaction homme-machine (200), le second circuit d'alimentation soumettant une seconde tension d'alimentation au moteur électrique ; **caractérisé en ce que** le mécanisme de levage électrique comprend en outre un bloc de partage d'alimentation agencé sur le bloc d'interaction homme-machine (200), le second circuit d'alimentation étant électriquement connecté à l'interface homme-machine pour soumettre la seconde tension d'alimentation au bloc de partage d'alimentation de manière à accroître une puissance de sortie du bloc de partage d'alimentation.

2. Mécanisme de levage électrique selon la revendication 1, dans lequel le second circuit d'alimentation comprend un circuit d'alimentation de moteur et une première commande configurée pour commander le moteur électrique, l'interface homme-machine étant électriquement connectée au circuit d'alimentation de moteur.

3. Mécanisme de levage électrique selon la revendication 2, dans lequel la première commande comprend un bloc échantillonneur configuré pour acquérir un état de fonctionnement du circuit d'alimentation de moteur et un bloc protecteur configuré pour ajuster une puissance allouée au moteur électrique sur la base d'un signal provenant du bloc échantillonneur.

4. Mécanisme de levage électrique selon la revendication 3, dans lequel le bloc échantillonneur comprend au moins l'un d'un échantillonneur de température, d'un échantillonneur de courant et d'un échantillonneur de tension, l'échantillonneur de température étant configuré pour acquérir la température d'un composant d'alimentation dans le circuit d'alimentation de moteur, l'échantillonneur de courant et l'échantillonneur de tension étant configurés pour acquérir des signaux électriques du circuit d'alimentation de moteur.

5. Mécanisme de levage électrique selon la revendication 2, dans lequel le bloc d'interaction homme-machine comprend une seconde commande configurée pour commander une puissance allouée au bloc de partage d'alimentation.

6. Mécanisme de levage électrique selon la revendication 5, dans lequel une interaction est établie entre la première commande et la seconde commande pour allouer une puissance au circuit d'alimentation de moteur.

7. Mécanisme de levage électrique selon la revendication 6, dans lequel le dispositif de commande comprend en outre une commande principale configurée pour traiter des signaux et émettre une instruction de commande, la commande principale étant connectée à la première commande et à la seconde commande pour établir une interaction de signal entre la première commande et la seconde commande.

8. Mécanisme de levage électrique selon la revendication 5, dans lequel le bloc d'interaction homme-machine comprend en outre un bloc pavé de touches et/ou un bloc afficheur, le bloc pavé de touches et/ou le bloc afficheur étant électriquement connectés au premier circuit d'alimentation.

9. Mécanisme de levage électrique selon la revendication 2, dans lequel le dispositif de commande comprend en outre un bloc de surveillance, le bloc de surveillance étant électriquement connecté à l'interface homme-machine pour surveiller une puissance allouée au bloc de partage d'alimentation, une interaction étant établie entre le bloc de surveillance et le circuit d'alimentation de moteur.

10. Mécanisme de levage électrique selon la revendication 1, dans lequel l'interface homme-machine comprend un premier groupe de broches électriquement connectées au premier circuit d'alimentation et un second groupe de broches électriquement connectées au second circuit d'alimentation.

11. Mécanisme de levage électrique selon la revendication 1, dans lequel le dispositif de commande comprend un connecteur de source d'alimentation se connectant à une tension en courant alternatif CA, le premier circuit d'alimentation comprend un premier convertisseur courant alternatif-courant continu CA-CC destiné à la conversion de tension, et le second circuit d'alimentation comprend un second convertisseur CA-CC destiné à la conversion de tension, le premier convertisseur CA-CC étant connecté en parallèle au second convertisseur CA-CC ; ou,
le dispositif de commande comprend un connecteur de source d'alimentation connecté à une tension CA, le second circuit d'alimentation comprend un convertisseur CA-CC destiné à la conversion de tension, et le premier circuit d'alimentation comprend un régulateur abaisseur de tension configuré pour délivrer en sortie un courant continu CC basse tension, le régulateur abaisseur de tension, après passage à travers un circuit de filtrage, étant connecté électriquement au convertisseur CA-CC.

12. Mécanisme de levage électrique selon la revendication 1, dans lequel le dispositif de commande comprend un connecteur de source d'alimentation se connectant à une tension en courant continu CC, le second circuit d'alimentation comprend un régulateur de tension configuré pour élever la tension ou abaisser la tension, et le premier circuit d'alimentation comprend un régulateur abaisseur de tension/stabilisateur de tension configuré pour abaisser/stabiliser la tension, le régulateur abaisseur de tension/stabilisateur de tension étant connecté électriquement au régulateur de tension ou étant connecté en parallèle au régulateur de tension ; ou,
le dispositif de commande comprend un connecteur de source d'alimentation se connectant à une tension CC, et le premier circuit d'alimentation comprend un régulateur abaisseur de tension pour abaisser la tension, le régulateur abaisseur de tension, après passage à travers un circuit de filtrage, étant électriquement connecté au connecteur de source d'alimentation, le second circuit d'alimentation, après passage à travers un circuit de filtrage, étant électriquement connecté au connecteur de source d'alimentation.

13. Mécanisme de levage électrique selon l'une quelconque des revendications 1 à 12, dans lequel la première tension d'alimentation est inférieure à 12 V.

14. Mécanisme de levage électrique selon l'une quelconque des revendications 1 à 12, dans lequel la seconde tension d'alimentation est comprise dans une plage de 12 V à 40 V.

15. Mécanisme de levage électrique selon l'une quelconque des revendications 1 à 12, dans lequel le bloc de partage d'alimentation est une interface de partage d'alimentation agencée sur le bloc d'interaction homme-machine ; ou le bloc de partage d'alimentation est une plate-forme de charge sans fil agencée sur le bloc d'interaction homme-machine.

16. Mécanisme de levage électrique selon l'une quelconque des revendications 1 à 12, dans lequel le bloc de partage d'alimentation comprend un stabilisateur de tension et un bloc de protocole prenant en charge au moins l'un des protocoles de charge rapide QC, de distribution de puissance PD et de charge Qi.
